Europäisches Patentamt

European Patent Office

Office européen des brevets

(19)

(11) Veröffentlichungsnummer: **0 265 727 B1**

# EUROPÄISCHE PATENTSCHRIFT

(12)

(45) Veröffentlichungstag der Patentschrift:
11.04.90

(51) Int. Cl.⁴: **F16H 7/08**

(21) Anmeldenummer: 87114638.7

(22) Anmeldetag: 07.10.87

(54) Kettenspanner.

(30) Priorität: 30.10.86 DE 3636918

(43) Veröffentlichungstag der Anmeldung:
04.05.88 Patentblatt 88/18

(45) Bekanntmachung des Hinweises auf die Patenterteilung:
11.04.90 Patentblatt 90/15

(84) Benannte Vertragsstaaten:
DE ES FR GB IT SE

(56) Entgegenhaltungen:
EP-A- 0 195 945
DE-A- 1 946 651
FR-A- 1 474 011
FR-A- 2 175 750

(73) Patentinhaber: INA Wälzlager Schaeffler KG,
Industriestrasse 1-3 Postfach 1220,
D-8522 Herzogenaurach(DE)

(72) Erfinder: Goppelt, Dieter, Kärntnerstrasse 1,
D-8521 Aurachtal(DE)
Erfinder: Schmidt, Dieter, Billrothstrasse 6,
D-8500 Nürnberg(DE)

(74) Vertreter: Klug, Horst, Dipl.-Ing. (FH) et al, c/o INA
Wälzlager Schaeffler KG Postfach 12 20,
D-8522 Herzogenaurach(DE)

**Beschreibung**

Die Erfindung betrifft einen Kettenspanner entsprechend den im Oberbegriff von Anspruch 1 enthaltenen Merkmalen.

Ein derartiger Kettenspanner ist in der US-A 3 626 776 beschrieben. Bei diesem Kettenspanner ist ein der Blockierung dienender Montagering tief im Innern des Dämpfungskolbens untergebracht.

Aufgabe der Erfindung ist es, einen Kettenspanner der eingangs genannten Art vorzuschlagen, dessen Dämpfungskolben mittels eines Werkzeugs von außen in die Blockierstellung bringbar und leicht ohne Werkzeug lösbar ist.

Erfindungsgemäß ist obige Aufgabe bei einem Kettenspanner der eingangs genannten Art dadurch gelöst, daß der Montagering in eine mit einer Schräge und einer an diese angrenzenden Rastfläche versehene Nut am vorderen Ende des Dämpfungskolbens eingeschnappt ist und daß der Montagering unter Verwendung eines in einen Spalt zwischen dem Gehäuse und dem Dämpfungskolben einsteckbaren Werkzeugs über die Schräge auf die Rastfläche aufschiebbar ist, wobei er in eine Rille des Gehäuses eingreift und so eine Bewegung des Dämpfungskolbens gegenüber dem Gehäuse blockiert.

Bei der Montage wird der Dämpfungskolben in das Gehäuse eingeschoben, bis der Montagering unter der Rille des Gehäuse liegt. Sodann wird in den Spalt ein Werkzeug eingesteckt und der Kolben wird freigegeben, so daß unter der Kraft der Feder der Montagering über die Schräge auf die Rastfläche gleitet, wobei er sich aufweitet. In dieser Stellung ist eine weitere Bewegung des Dämpfungskolbens unter der Kraft der Feder nicht möglich.

Zum Lösen der Blockierung wird der Dämpfungskolben entgegen der Kraft der Feder gedrückt. Dies kann manuell oder durch die Kette selbst geschehen. Der Montagering wird dabei von der Rastfläche geschoben und gleitet auf der Schräge in die Nut zurück. Nach dem erneuten Freigeben des Dämpfungskolbens - ohne Verwendung des Werkzeugs - bleibt der Montagering wirkungslos, so daß der Dämpfungskolben nunmehr betriebsbereit ist.

Günstig ist bei der beschriebenen Einrichtung auch, daß dann, wenn die Blockierstellung einmal gelöst ist, sie unter Verwendung des Werkzeugs ohne weiteres wieder eingestellt werden kann.

Die Blockierstellung erleichtert das Anbringen der Kette. Denn der Kettenspanner wird erst dann wirksam, wenn die Kette montiert ist.

In bevorzugter Ausgestaltung der Erfindung steht der Dämpfungskolben in Blockierstellung vor dem Anfang seines Kettenspannbereichs. Dadurch ist gewährleistet, daß nach dem Aufheben der Blockierung der Dämpfungskolben an den Anfang seines Kettenspannbereichs geht.

Günstig ist bei der beschriebenen Einrichtung auch der einfache Aufbau. Denn für die Blockierstellung braucht am Kolben lediglich die Nut mit Rastfläche und Schräge ausgebildet zu werden. Als Rille des Gehäuses kann eine Rastrille verwendet werden, die ohnehin vorhanden ist.

Weitere vorteilhafte Ausgestaltungen der Erfindung ergeben sich aus Unteransprüchen und der folgenden Beschreibung eines Ausführungsbeispiels. In der Zeichnung zeigen:

Figur 1 einen Kettenspanner im Schnitt, wobei der Dämpfungskolben in der äußersten Raststellung steht,

Figur 2 eine Teilansicht des Kettenspanners, wobei der Dämpfungskolben in der innersten Anschlagstellung steht,

Figur 3 eine Teilansicht des Kettenspanners, wobei der Dämpfungskolben in Montagestellung blockiert ist,

Figur 4 eine Teilansicht des Kettenspanners, wobei der Dämpfungskolben sich in die innerste Raststellung bewegt,

Figur 5 eine Teilansicht des Kettenspanners, wobei der Dämpfungskolben in seiner innersten Raststellung steht und

Figur 6 eine Teilansicht des Kettenspanners, wobei aus der Stellung nach Figur 5 von der Kette eine Stoßbelastung auf den Dämpfungskolben ausgeübt ist.

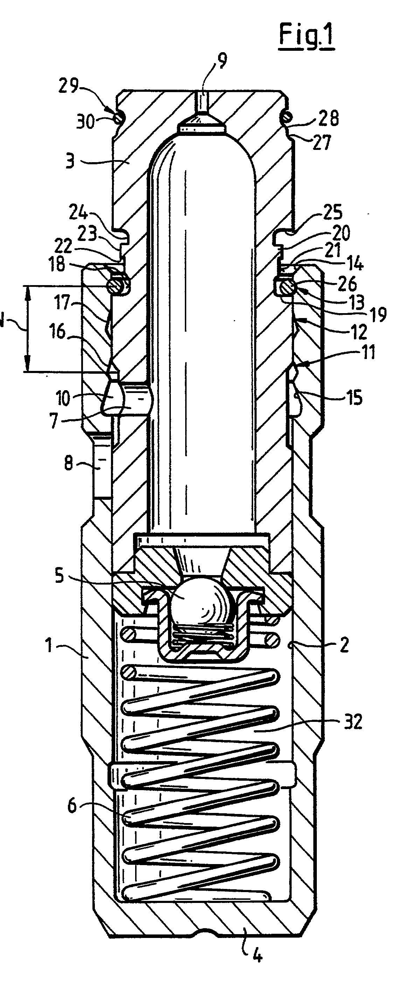

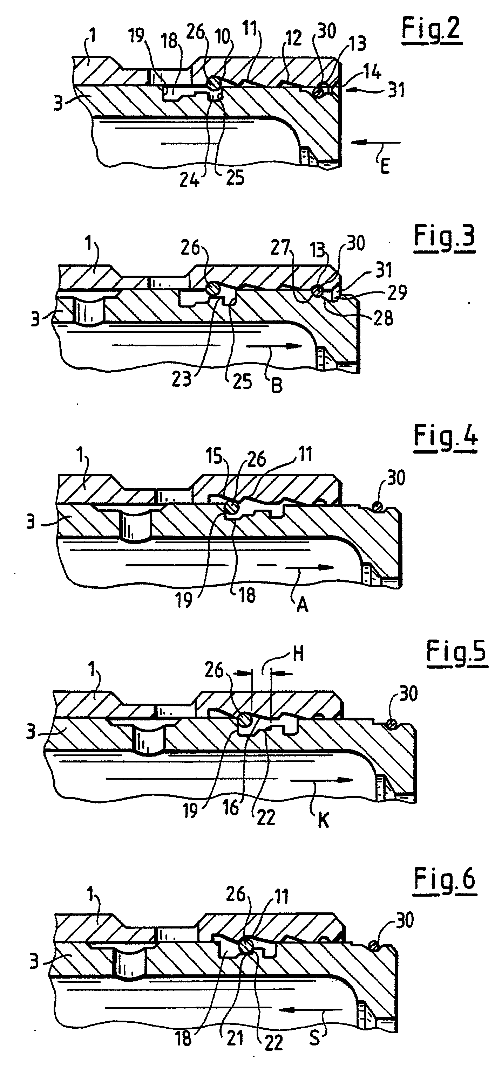

Die Figuren 2 bis 6 sind gegenüber Figur 1 verkleinert.

Ein einteiliges Gehäuse (1) weist eine einseitig offene Führungsbohrung (2) auf. In diese ist ein hohler Dämpfungskolben (3) eingesetzt. An der dem Boden (4) des Gehäuses (1) zugewandten Seite des Dämpfungskolbens (3) ist ein Rückschlagventil (5) angeordnet. Zwischen dem Boden (4) und dem Rückschlagventil (5) liegt eine auf den Kolben (3) wirkende Druckfeder (6). Seitlich am Kolben (3) ist eine Öffnung (7) vorgesehen, die mit einem Öldruckanschluß (8) des Gehäuses (1) in Verbindung steht. Eine Öffnung (9) am Kopf des Kolbens (3) dient der Entlüftung.

Am Innenumfang des Gehäuses (1) sind von innen nach außen nebeneinander eine Aufnahmenut (10), drei oder im Bedarfsfall mehrere gleiche Rastrillen (11,12,13), sowie eine Einführschräge (14) ausgebildet. Der Durchmesser der Aufnahmenut (10) ist größer als der der Rastrille (11). Die Aufnahmenut (10) weist zur Rastrille (11) hin eine Schräge (15) auf. Mit entsprechenden Schrägen (16,17) sind die Rastrillen (11,12) versehen.

Am Außenumfang des Kolbens (3) ist eine Sperrnut (18) ausgebildet, die einerseits von einem Anschlagrand (19) und andererseits von einer Anschlagrampe (20) begrenzt ist. Die Anschlagrampe (20) weist eine Sperrfläche (21), eine Anschlagkante (22) und eine Durchgangsfläche (23) auf. An die Anschlagrampe (20) schließt sich eine Einschubnut (24) mit einem Einschubrand (25) an. Der äußere Durchmesser des Anschlagrandes (19) und des Einschubrandes (25) entsprechen dem Außendurchmesser des Kolbens (3). Der Durchmesser der Durchgangsfläche (23) ist kleiner. Den genannten, umlaufenden Nuten bzw. Rillen des Gehäuses (1) und des Kolbens (3) ist ein federnder Anschlagring (26) zugeordnet.

Außen an dem Kolben (3) ist eine mit einer Rastfläche (27) und einer Schräge (28) versehene Nut (29) ausgebildet, die einem Montagering (30) zugeordnet ist.

Der Zusammenbau des beschriebenen Kettenspanners geschieht etwa folgendermaßen:

Nach dem Einsetzen der Druckfeder (6) in das Gehäuse (1) wird der Kolben (3) eingeschoben, in dessen Einschubnut (24) der Anschlagring (26) gelegt ist. In der Nut (29) liegt dabei der Montagering (30), der federnd am Nutgrund anliegt. Beim Einschieben des Kolbens (3) gelangt der Anschlagring (26) an die Einführschräge (14), die diesen entgegen seiner Federkraft in die Einschubnut (24) drückt. Beim weiteren Einschieben des Kolbens (3) drückt der Einschubrand (25) den Anschlagring (26) unter den Rastrillen (13,12,11) hindurch, bis er in die Aufnahmenut (10) gelangt. In der Aufnahmenut (10) spreizt sich der Anschlagring (26) unter seiner Federkraft auf, so daß er am Grund der Aufnahmenut (10) anliegt. Die Tiefe der Aufnahmenut (10) ist kleiner als der Querschnitt des Anschlagrings (26), so daß der in der Aufnahmenut (10) liegende Anschlagring (26) den innersten Anschlag für das manuelle Einschieben in Richtung des Pfeiles (E) bildet (vgl. Figur 2). Der Montagering (30) liegt dabei unterhalb der Rastrille (13).

Danach wird mit einem durch den Spalt (31) zwischen dem Kolben (3) und dem Gehäuse (1) eingesteckten Werkzeug der Montagering (30) in dieser Stellung gehalten und der Kolben (3) wird freigelassen. Unter der Wirkung der Druckfeder (6) verschiebt sich dann der Kolben (3) in Richtung des Pfeiles (B), wobei über die Schräge (28) die Rastfläche (27) unter den Montagering (30) gleitet und diesen entgegen seiner Federkraft in die Rastrille (13) drückt. Es ist dann die Blockierstellung des Kolbens (3) erreicht (vgl. Figur 3). In der Blockierstellung wird der Kettenspanner an dem Aggregat, beispielsweise Motor, dessen Kette zu spannen ist, montiert. In dieser Blockierstellung ist der Anschlagring (26) wirkungslos. Er steht über der Durchgangsfläche (23).

Nach der Montage der Kette und gegebenenfalls eines zwischen dem Kolben (3) und der Kette vorgesehenen Übertragungsgliedes wird entgegen der Richtung des Pfeiles (B) manuell auf den Dämpfungskolben (3) gedrückt, so daß der Montagering (30) von der Rastfläche (27) unter seiner Federkraft über die Schräge (28) in die Nut (29) gleitet. Der Anschlagring (26) verhindert dies nicht, da sein Abstand zum Einschubrand (25) ausreichend groß ist.

Der Kolben (3) bewegt sich nun in Richtung des Pfeiles (A) unter der Wirkung der Druckfeder (6) in Kettenspannrichtung. Der Anschlagrand (19) trifft dabei auf den Anschlagring (26) und schiebt diesen über die Schräge (15) in Richtung der Rastrille (11) (vgl. Figur 4). Die Sperrnut (18) ist hinreichend tief, um dabei das Zusammendrücken des Anschlagrings 26) nicht zu behindern. Der Anschlagring (26) schnappt dann in die erste Rastrille (11). Diese Stellung ist der Beginn des Ketten-Spannbereiches. Die Kette ist jetzt gespannt.

Die Arbeitsweise im Betrieb ist etwa folgende:

Über den Öldruckanschluß (8), der im Beispielsfalle unter Motoröldruck steht, wird über das Rückschlagventil (5) im Gehäuse (1) zwischen diesem und dem Kolben (3) im Raum (32) ein Hochdruck aufgebaut.

Bei einer schlagartigen Belastung der Kette wirkt auf den Kolben (3) eine Kraft in Richtung des Pfeiles (S) (vgl. Figur 6). Dies führt zu einer Rücklaufbewegung des Kolbens (3) entgegen der Kraftrichtung der Druckfeder (6). Die Rücklaufbewegung ist durch den Öldruck im Raum (32) des Gehäuses (1) gedämpft. Bei der Rücklaufbewegung gelangt die Sperrfläche (21) unter den in der Rastrille (11) liegenden Anschlagring (26). Sie verhindert, daß der Anschlagring (26) zusammengedrückt wird und gewährleistet, daß er am Grund der Rastrille (11) verbleibt.

Reicht der Öldruck im Raum (32) nicht aus um den Kolben (3) bei Belastung zum Stillstand zu bringen, dann trifft die Anschlagkante (22) auf den Anschlagring (26). Dadurch ist die Rücklaufbewegung des Kolbens (3) in Richtung des Pfeiles (S) begrenzt. Dieser maximale Rücklaufhub (H) ist durch den Abstand des Anschlagrandes (19) von der Anschlagkante (22) und den Durchmesser des kreisförmigen Querschnittes des Anschlagrings (26) bestimmt. Der maximale Rücklaufhub beträgt beispielsweise 2 mm.

Durch die Begrenzung des Rücklaufhubes (H) ist verhindert, daß die Kette bei schlagartigen Belastungen Zähne der von ihr angetriebenen Zahnräder überspringen kann. Günstig dabei ist auch, daß der Anschlagring (26) im Hinblick auf das Spannen und die Dämpfung der Kette lediglich als Anschlag wirkt und seine Federeigenschaft nur dazu dient, ihn in die jeweils geeignete Position zu bringen. Die Begrenzung des maximalen Rücklaufhubes (H) durch den Anschlagring (26) ist beispielsweise wirksam, wenn kurz nach dem Anlassen des Motors noch kein hinreichender Öldruck im Raum (32) aufgebaut ist, oder bei abgeschaltetem Motor das Leertrum der Kette, an dem der Kettenspanner angreift, belastet wird.

Längt sich die Kette im Betrieb beispielsweise aufgrund von Verschleißerscheinungen, dann wird der Kolben (3) unter der Wirkung der Druckfeder (6) bzw. des Öldrucks im Raum (32) in Richtung des Pfeiles (K) (vgl. Figur 5) weiter verschoben, wobei sein Anschlagrand (19) den Anschlagring (26) über die Schräge (16) der Rastrille (11) in die nächste Rastrille (12) verschiebt. Der Abstand der Rastrillen (11,12,13) ist größer als der maximale Rücklaufhub (H).

Ist der Anschlagring (26) in die Rastrille (12) gelangt, dann gilt für den maximalen Rücklaufhub (H) das oben Gesagte. Schließlich gelangt der Anschlagring (26) in die Rastrille (13) (vgl. Figur 1). Auch in dieser äußersten Raststellung kann der Kolben (3) nur um den maximalen Rücklaufhub (H) rücklaufen. Der den Ketten-Spannbereich bestimmende Nutzhub (N) des Kolbens (3) (vgl. Figur 1) beträgt beispielsweise 23 mm.

**Patentansprüche**

1. Kettenspanner mit einem in einem Gehäuse geführten Dämpfungskolben, der von einer Feder in Kettenspannrichtung axial beaufschlagt ist, wobei der Dämpfungskolben mittels eines Montagerings im Gehäuse in einer Blockierstellung haltbar ist, die sich durch axialen Druck entgegen der Kettenspannrichtung löst, **und wobei Mittel zur Begrenzung des Rücklaufhubes des Dämpfungskolbens vorgesehen sind, dadurch gekennzeichnet,** daß der Montagering (30) in eine mit einer Schräge (28) und einer an diese angrenzenden Rastfläche (27) versehene Nut (29) am vorderen Ende des Dämpfungskolbens (3) eingeschnappt ist und daß der Montagering (30) unter Verwendung eines in einen Spalt (31) zwischen dem Gehäuse (1) und dem Dämpfungskolben (3) einsteckbaren Werkzeugs über die Schräge (28) auf die Rastfläche (27) aufschiebbar ist, wobei er in eine Rille (13) des Gehäuses (1) eingreift und so eine Bewegung des Dämpfungskolbens (3) gegenüber dem Gehäuse (1) blockiert.

2. Kettenspanner nach Anspruch 1, **dadurch gekennzeichnet,** daß die Feder (6) die Schräge (28) unter dem vom Werkzeug gehaltenen Montagering (30) hindurchschiebt, bis dieser auf der Rastfläche (27) aufliegt, wobei sich der Montagering (30) aufspreizt.

3. Kettenspanner nach Anspruch 1 oder 2, **dadurch gekennzeichnet,** daß der Montagering (30) radial federnd ausgebildet ist.

4. Kettenspanner nach einem der vorhergehenden Ansprüche, **dadurch gekennzeichnet,** daß der Dämpfungskolben (3) in Blockierstellung vor dem Anfang seines Kettenspannbereiches steht.

## Claims

1. Chain tensioner with a damping piston guided in a housing and loaded axially in the chain tensioning direction by a spring, the damping piston being retainable by means of a mounting ring in the housing in a blocked position which gets released by axial pressure against the chain tensioning direction and means for limiting the return stroke of the damping piston being provided, characterized in that the mounting ring (30) is snapped into a groove (29) at the front end of the damping piston (3), the groove (29) being provided with a bevel (28) and a catch surface (27) adjoining this and in that the mounting ring (30) can be pushed over the bevel (28) onto the catch surface (27) by means of a tool which can be inserted into a gap (31) between the housing (1) and the damping piston (3) whereat the mounting ring (30) engages into a groove (13) of the housing (1) thus blocking a movement of the damping piston (3) with respect to the housing (1).

2. Chain tensioner according to Claim 1, characterized in that the spring (6) pushes the bevel (28) through below the mounting ring (30) held by the tool till the mounting ring (30) comes to be situated on the catch surface (27), in doing which the mounting ring (30) expands.

3. Chain tensioner according to Claim 1 or 2, characterized in that the mounting ring (30) is designed to be radially elastic.

4. Chain tensioner according to one of the preceding claims, characterized in that in the blocked position the damping piston (3) is located before the beginning of its chain tensioning range.

## Revendications

1. Tendeur de chaîne avec un piston amortisseur guidé dans un boîtier et sollicité axialement par un ressort dans la direction de tension de la chaîne, le piston amortisseur pouvant être maintenu au moyen d'une bague de montage en position bloquée qui se défait par pression axiale en sens inverse de la direction de tension de la chaîne, et des moyens pour la limitation de la course de retour du piston amortisseur étant prévus, caractérisé en ce que la bague de montage (30) est encliquetée dans une gorge (29) à l'extrémité avant du piston amortisseur (3) munie d'un chanfrein (28) et d'une surface d'arrêt (27) avoisinant celui-ci et qu'au moyen d'un outil qui peut être inséré dans une fente (31) entre le boîtier (1) et le piston amortisseur (3), la bague de montage (30) peut être poussée par-dessus le chanfrein (28) sur la surface d'arrêt (27), de sorte qu'elle s'engage dans une encoche (13) du boîtier (1) et bloque un mouvement du piston amortisseur (3) par rapport au boîtier (1).

2. Tendeur de chaîne selon la revendication 1, caractérisé en ce que le ressort (6) pousse le chanfrein (28) par-dessous la bague de montage (30) retenue par l'outil jusqu'au moment où celle-ci se trouve sur la surface d'arrêt (27), de sorte que la bague de montage (30) s'élargit.

3. Tendeur de chaîne selon la revendication 1 ou 2, caractérisé en ce que la bague de montage (30) est formée de manière à faire radialement ressort.

4. Tendeur de chaîne selon une des revendications précédentes, caractérisé en ce qu'en position bloquée, le piston amortisseur (3) se trouve devant le début de son champ de tension de chaîne.

<u>Fig.1</u>

Fig.2

Fig.3

Fig.4

Fig.5

Fig.6